# EUROPEAN PATENT SPECIFICATION

(11) **EP 3 113 899 B1**
(45) Date of publication and mention of the grant of the patent: **20.11.2019**
(21) Application number: 15731664.7
(22) Date of filing: 02.06.2015
(51) Int. Cl.: B23K 9/095, B23K 9/16, G09B 19/24, G09B 25/02

(54) **SYSTEM FOR AND METHOD OF MONITORING AND CHARACTERIZING MANUAL WELDING OPERATIONS**
SYSTEM UND VERFAHREN ZUR ÜBERWACHUNG UND CHARAKTERISIERUNG VON MANUELLEN SCHWEISSOPERATIONEN
SYSTÈME ET PROCÉDÉ DE SURVEILLANCE ET DE CARACTÉRISATION D'OPÉRATIONS DE SOUDAGE MANUEL

(30) Priority: 02.06.2014 US 201414293826
(43) Date of publication of application: 11.01.2017
(73) Proprietor: Lincoln Global, Inc., Santa Fe Springs, CA 90670 (US)
(72) Inventor: BOULWARE, Paul C., Columbus, OH 43220 (US); CONRARDY, Christopher C., Columbus, OH 43228 (US); CLARK, Douglas A., Columbus, OH 43221 (US); FORQUER, M. William, Columbus, OH 43221 (US)
(74) Representative: Grosse Schumacher Knauer von Hirschhausen
(86) International application number: PCT/IB2015/000814
(87) International publication number: WO 2015/185973

(56) References cited:
- WO-A1-2013/061518
- WO-A1-2015/105580
- US-A1- 2010 062 406
- US-A1- 2011 117 527
- US-A1- 2013 075 380
- US-A1- 2014 134 580

## Description

### FIELD OF THE INVENTION

The invention is related to a method of monitoring and characterizing manual welding according to claim 1 and to a system according to claim 19. The described invention relates in general to a system for characterizing manual welding operations, and more specifically to a system for providing useful information to a welding trainee by capturing, processing, and presenting in a viewable format, data generated by the welding trainee in manually executing an actual weld in real time.

### TECHNICAL BACKGROUND

The manufacturing industry's desire for efficient and economical welder training has been a well-documented topic over the past decade as the realization of a severe shortage of skilled welders is becoming alarmingly evident in today's factories, shipyards, and construction sites. For example a welding software for detecting and control of welding device is described in WO 2015/105580 (Art. 54(3) EPC). Different systems for training welders are described in US 2011/0117527 A1 (basis for the preamble of claims 1 and 19), and in US 2014/0134580 A1. A simulator for weld training is described in US 2010/0062406 A1. A rapidly retiring workforce, combined with the slow pace of traditional instructor-based welder training has been the impetus for the development of more effective training technologies. Innovations which allow for the accelerated training of the manual dexterity skills specific to welding, along with the expeditious indoctrination of arc welding fundamentals are becoming a necessity. The characterization and training system disclosed herein addresses this vital need for improved welder training and enables the monitoring of manual welding processes to ensure the processes are within permissible limits necessary to meet industry-wide quality requirements. To date, the majority of welding processes are performed manually, yet the field is lacking practical commercially available tools to track the performance of these manual processes. Thus, there is an ongoing need for an effective system for training welders to properly execute various types of welds under various conditions.

### SUMMARY OF THE INVENTION

In order to improve welder training a method of monitoring and characterizing manual welding according to claim 1 is described and a system according to claim 19. Preferred embodiments of the methods are subject of the subclaims. The following provides a summary of certain exemplary embodiments of the present invention. This summary is not an extensive overview and is not intended to identify key or critical aspects or elements of the present invention or to delineate its scope.

Additional features and aspects of the present invention will become apparent to those of ordinary skill in the art upon reading and understanding the following detailed description of the exemplary embodiments. As will be appreciated by the skilled artisan, further embodiments of the invention are possible without departing from the scope of the invention. Accordingly, the drawings and associated descriptions are to be regarded as illustrative and not restrictive in nature.

### BRIEF DESCRIPTION OF THE DRAWINGS

The accompanying drawings, which are incorporated into and form a part of the specification, schematically illustrate one or more exemplary embodiments of the invention and, together with the general description given above and detailed description given below, serve to explain the principles of the invention, and wherein:
FIG. 1 is a flow diagram of the monitoring system and methodology of an exemplary embodiment of the system and method of the present invention;
FIG. 2 is a flow diagram of the automated audio feedback component of the system and methodology of the present invention; and
FIG. 3 is a flow diagram of the augmented reality component of the system and methodology of the present invention.

### DETAILED DESCRIPTION

Exemplary embodiments of the present invention are now described with reference to the Figures. Reference numerals are used throughout the detailed description to refer to the various elements and structures. In other instances, well-known structures and devices are shown in block diagram form for purposes of simplifying the description. Although the following detailed description contains many specifics for the purposes of illustration, a person of ordinary skill in the art will appreciate that many variations and alterations to the following details are within the scope of the invention. Accordingly, the following embodiments of the invention are set forth without any loss of generality to, and without imposing limitations upon, the claimed invention.

In some embodiments, the present invention incorporates and expands upon the technology disclosed in U.S. patent application Ser. No. 13/543,240. U.S. patent application Ser. No. 13/543,240 discloses a system for characterizing manual welding operations, and more specifically a system for providing useful information to a welding trainee by capturing, processing, and presenting in a viewable format, data generated by the welding trainee in manually executing an actual weld in real time. More specifically, the system disclosed in U.S. patent application Ser. No. 13/543,240 includes a data generating component; a data capturing component; and a data processing component. The data generating component further includes a fixture, wherein the geometric characteristics of the fixture are predetermined; a workpiece adapted to be mounted on the fixture, wherein the workpiece includes at least one joint to be welded, and wherein the vector extending along the joint to be welded defines an operation path; at least one calibration device, wherein each calibration device further includes at least two point markers integral therewith, and wherein the geometric relationship between the point markers and the operation path is predetermined; and a welding tool, wherein the welding tool is operative to form a weld at the joint to be welded, wherein the welding tool defines a tool point and a tool vector, and wherein the welding tool further includes a target attached to the welding tool, wherein the target further includes a plurality of point markers mounted thereon in a predetermined pattern, and wherein the predetermined pattern of point markers is operative to define a rigid body. The data capturing component further includes an imaging system for capturing images of the point markers. The data processing component is operative to receive information from the data capturing component and then calculate the position and orientation of the operation path relative to the three-dimensional space viewable by the imaging system; the position of the tool point and orientation of the tool vector relative to the rigid body; and the position of the tool point and orientation of the tool vector relative to the operation path. With regard to the system components and operational principles discussed above (i.e., how the data which characterizes the welding operation is obtained), the present invention provides means for taking advantage of the acquired data in the production monitoring realm and provides various methods for utilizing manual welding characterization data for monitoring various aspects of production.

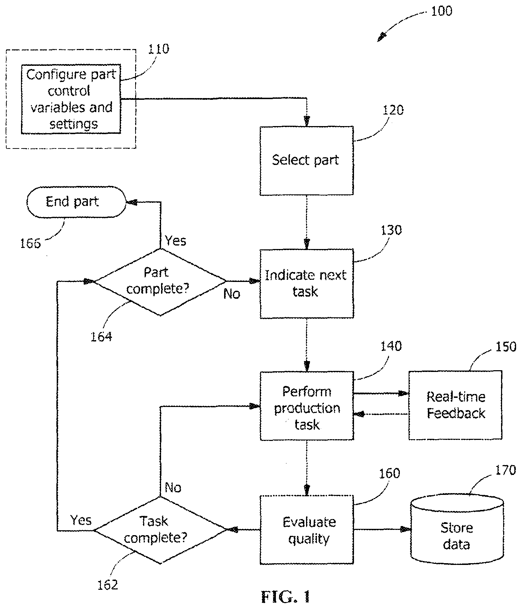

FIG. 1 provides a flow chart that details system 100 and an associated method in accordance with the present invention for integrating manual welding performance measurements into the context of production monitoring. From initially configuring a system to measuring production quality, the methodology described herein includes means for taking advantage of manual tool manipulation and process measurements to better monitor production quality and outcome. As shown in FIG. 1, the initial step in the process is to configure the system inputs at step 110. More specifically, this step includes providing system 100 with part information and process variable control targets and acceptability limits. Production monitoring can commence once the configuration information is present for at least one part. Step 120 includes selecting a part, which is the first step in the monitoring aspect of the methodology. Selection of the part initializes the monitoring settings, and initializes production of the part to the first production task at step 130. The active task is performed with or without real-time feedback at step 150 on the performance at step 140. The performance is then evaluated post-process to identify any possible quality concerns at step 160 and the corresponding data is stored at step 170. If remedial action is required this is indicated to the user in the form of either a disparate production task or a request to complete the active task. If the task is deemed complete the system shifts to the next production task. Once the final production task is completed the part is deemed finished and user may move on to the next part (see decision steps 162 and 164 and ending step 166 in FIG. 1).

As indicated above, step 110 includes configuring the system inputs. The purpose of this step is to populate the system with the parts that will be monitored and their corresponding characteristics, which include both part variables and task variables as detailed in Tables 1 and 2, below.

**TABLE 1**

| List of Parts Variables. |
|---|
| Part Variables |
| Part name or ID |
| Solid model |
| Number of tasks (e.g. welds, seals, part attachments, etc.) |

**TABLE 2**

| List of Task Variables. |
|---|
| Task Variables |
| Task name or ID |
| Operation path or locations |
| Operation direction (if neccessary) |
| Task specific variables* |

For each type of task, a set of variables specific to that task are then entered into the system at step 110. For example, a welding task will include both form and execution variables which define the task. Tables 3 and 4, which appear below, provide examples of these types of variables.

**TABLE 3**

| Examples of Form Variables. | |
|---|---|
| Form Variables Typical Values | |
| Process | SMAW, GMAW, FCAW, GTAW |
| Joint Type | Fillet, Lap, Groove |
| Position | Flat, Horizontal, Vertical, Overhead |
| Material | Steel, Aluminum, Titanium |
| Thickness | 0.25, 0.5, 1 [in] |
| Electrode Type | ER70S-6 |
| Root Gap | 0.03, 0.06, 0.125 [in] |
| Root Landing | 0.03, 0.125, 0.25 [in] |
| Included Angle | 10, 15, 20 [°] |

**TABLE 4**

| Examples of Execution Variables. | |
|---|---|
| Execution Variables Typical Values | |
| Polarity | DCEP, DCEN |
| Work Angle | 45 ± 5 [°] |
| Travel Angle | 5 ± 5 [°] |
| Arc Length | 0.5 ± 0.125 [in] |
| Travel Speed | 10 ± 2 [ipm] |
| Tool Placement | 0.0 ± 0.1 [in] |
| Current | 180 ± 20 [A] |
| Voltage | 22 ± 2 [V] |
| Weld Length | 8 ± 0.25 [in] |
| Weld Size | 0.25 ± 0.025 [in] |

The variables listed in Tables 3 and 4 provide the user with information that both describes the task and defines the proper manner of execution. Additionally, the configuration function provides the means to enter tool definitions into the system. The tool definitions allow for the system to integrate tool position into its working coordinate system, which allows for tool position and orientation to be compared with the task operation path, thereby permitting acquisition of tool manipulation variables. Each task which requires a tool must have one definition before production monitoring can be executed. These tools are then called up by the system when user initiates a task which requires the tool.

With reference again to FIG. 1, the remaining portion of the monitoring methodology of this invention takes the user through the production of a part and the inconspicuous monitoring of performance in the manufacturing of that part. Before monitoring can begin, a part is selected at step 120 when the library of parts configured in step 110 is accessed by a user of the system. The system then auto-populates with all of the information relative to the selected part. This information includes a list of tasks for completion of the part, a graphical representation of the part, highlighted tasks on the part, an indication of the first task to be carried out, and any other relevant information. An indication of the next task then occurs at step 130. The active task is indicated to the user graphically and all pertinent information is provided to the user to carrying out completion of the task. This information varies from task to task. For example, if the task is to place a weld two components of the part together, the system will provide the user with all of the information listed in Tables 3 and 4. The start and stop locations will be clearly identified to the user. Additionally, periphery information will be highlighted, which may include special fixturing, tools, possible pitfalls, etc. Performance of a production task occurs at step 140. Once the user has digested the necessary information to carry out the task, production on the task is started. Again, this aspect of the invention varies task by task. Again using the welding example, completion of the task includes depositing a weld in the proper location, with the proper speed, proper technique, proper process variables, etc. Real-time feedback is provided at step 150. During the performance of a production task, a number of real-time feedback variables are available to help the user stay within the defined quality control window. For welding tasks, these feedback mechanisms include the Automated Audio Feedback and Augmented Reality Weld Rendering.

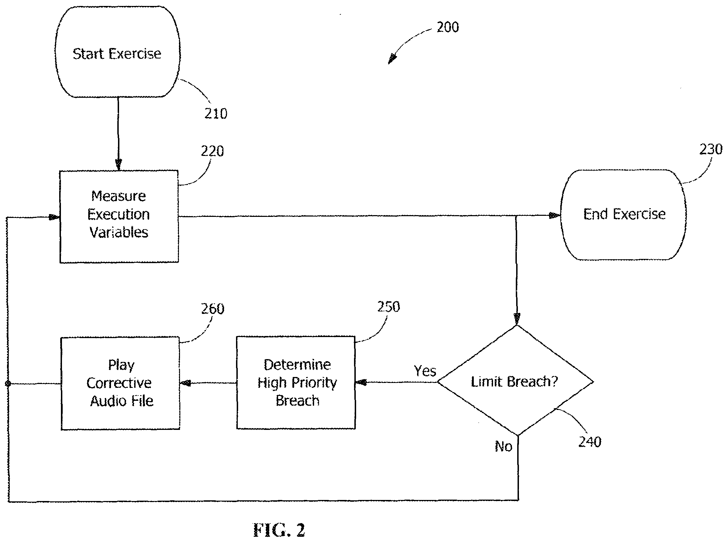

Automated audio feedback includes a real-time feedback mechanism which provides feedback to the user through various automated voice commands. Prerecorded files are played depending which variables are outside of the control limits. FIG. 2 provides a flow diagram of automated audio feedback component 200, wherein the exercise begins at 210; execution variables are measured at step 220; the exercise may end at step 230 or if a limit is breached at decision point 240 a determination of a high priority breach is made at step 250; and a corrective audio file is played at step 260. As shown in Table 5, below, a hierarchy is established by which high-priority variables take precedence over lower priority variables. At any given data interpretation frame, only one feedback command is executed based on the priority hierarchy (e.g. tool placement takes precedence over tool angle, which takes precedence over travel speed, etc.)

**TABLE 5**

| Automated audio coaching hierarchy. | |
|---|---|
| Rank Variable | |
| 1 | Tool Placement |
| 2 | Tool Offset |
| 3 | Travel Speed |
| 4 | Work Angle |
| 5 | Travel Angle |

Commands are direction-based, meaning that the commands coach the user into the direction of compliance (e.g., if the performance is breaching a lower boundary, the commands will coach the trainee to increase the given variable).

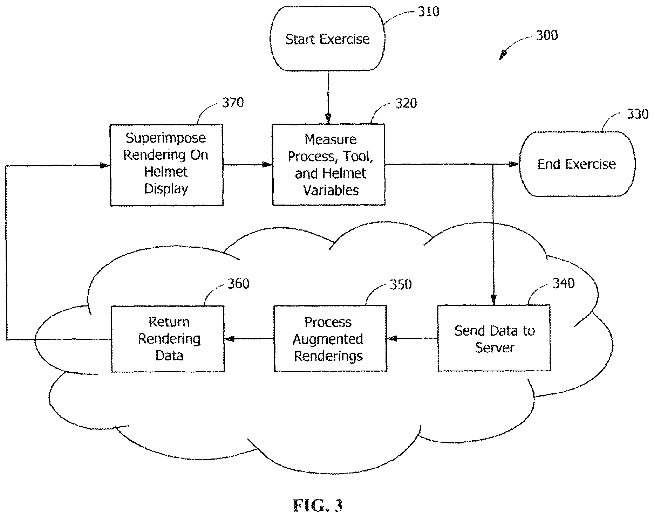

Augmented reality provides real-time feedback during task performance. In welding tasks, sensors provide real-time position and orientation values of both the welding helmet and the welding tool in addition to processing data to a cloud-based server. This server performs processor intensive rendering calculations and/or finite element calculations, feeding back to the local system image data to be superimposed over the welder's view of the welding joint. FIG. 3 provides a flow diagram of the sensor and data flow for augmented reality component 300, wherein the exercise begins at 310; process, tool, and helmet variables are measured at step 320; the exercise may end at 330 or data may be sent to the server at step 340; augmented renderings are processed at step 350; rendering data is returned at step 360; and the rendering is superimposed on the helmet display at step 370. For welding, the superimposed imagery may include the following features: highlights of the welding joint location; target and actual weld pool shape and position (this is the first step is learning to manipulate a weld pool); target and actual arc placement within the joint; target and actual tool angles; target and actual tool offset; target and actual travel speed; live indication of defect formation along the weld; or combinations thereof. A cloud-based server may be utilized to manage the data for augmented reality feedback. Specifically, the processing power of the server may be utilized to take low data count information (i.e., process, tool, and helmet) in, to output image renderings that can be immediately superimposed on the user's see-through display. FIG. 3 also illustrates the remote data processing functionality of this invention. Once the performance of a task is complete, the system evaluates the quality of performance at step 160 (see FIG. 1). This evaluation can be done (i) in terms of performance measurements (e.g., tool manipulation and process variables within control limits); and/or (ii) in terms of numerical quality simulations (e.g., probability of defect formation), and/or (iii) with direct quality measurements.

Performance-based evaluation uses direct performance measurements compared to preset control limits to make a quality determination along the operation path. For example, in welding tasks, control limits will be set for each of the execution variables listed in Table 4. If any of the measured variables fall outside of the control limits at a certain location along the weld, that location is flagged as a potential quality issue. The control limit breach type is included in the flag. Thus, is important to properly set the control limits to align with quality producing indications. The limits must be tight enough to detect quality issues when they arise, but loose enough to avoid the generation of false positives. Additionally, many applications in welding require control limits to be variable along the length of the weld. In other words, the control limit set (i.e., allowable maximum and minimum window) may change as a function of position along the operation path. This is typical for curved operation paths or operation paths which turn corners. Generating variable control limit sets can be tedious for long and circuitous operation paths and to facilitate the process, these sets can be generated by teaching the system with a set of "good" welds and "bad" welds. In configuration, the user calibrates the control set by performing the production task a number of times and assigning each performance a good or bad value. The system then automatically generation a position-based set of control limits for the task using a standard deviations from the mean of the good welds.

Simulated quality evaluation using tool manipulation and process measurements to calculate probabilities of defect formation as a function of position along the operation path. For welding tasks, the output can be a probability of formation of sub-surface defects (e.g., porosity, lack of fusion, lack of penetration, etc.) or surface defects (e.g., undercut, underfill, poor toe angles, etc.), or material defects (generation of an unwanted phase or constituent, high distortion, crack generation). These values are generated by way of numerical simulation where the form and execution variables act as the inputs and defect generation is the output. Like performance-based evaluation these results can be shown graphically to the user in the form of highlights on the part solid model.

Directly measured quality evaluation is basically identical to simulated quality evaluation except that the generation of the quality data is taken from sensor tools which physically measure for the presence of defects. These tools can vary from sub-surface inspection tools (e.g. ultrasonic, eddy current, x-ray inspection) to surface tools (e.g., laser scanner, machine vision, dye penetrant, etc.). Like the other forms of evaluation, any indication of unacceptable performance is highlighted graphically to the user in the form of highlights on a solid model of the part. If performance of a task has been compromised though a performance-based evaluation or a quality-based evaluation, the user interface will provide a remedial action. This can be as simple as a flag to inspect to instructing the user to rework the task. With reference to FIG. 1, once a task is deemed complete at decision point 164 the user interface moves on to the next performance task at 130. Once all performance tasks are complete, the part is deemed complete at end point 166. Acquired performance data for each production task is stored in either a local or remote server at 170. This data can then be used for statistical process control, quality validation for legal matters, and for other purposes.

While the present invention has been illustrated by the description of exemplary embodiments thereof, departures may be made from such details without departing from the scope of the invention as defined in the appended claims.

**REFERENCE NUMBERS**

| | | | |
|---|---|---|---|
| 100 | providing system | 230 | step |
| 110 | step | 240 | point |
| 120 | step | 250 | step |
| 130 | step | 260 | step |
| 140 | step | 300 | component |
| 150 | step | 310 | step |
| 160 | step | 320 | step |
| 162 | step | 330 | step |
| 164 | step | 340 | step |
| 166 | step | 350 | step |
| 170 | step | 360 | step |
| 200 | audio feedback component | 370 | step |
| 210 | step | | |
| 220 | step | | |

## Claims

1. A method of monitoring and characterizing manual welding, comprising;
(a) providing a welding system, wherein the welding system further includes both hardware and software components, wherein the hardware and software are operative to gather and process data in real time, and wherein the data is derived from an actual welding exercise conducted by a welder;
(b) providing the system with part information, process variable control targets, and acceptability limits;
(c) selecting a part to be welded from the part information;
(d) indicating a production task to be completed on the selected part;
(e) performing the indicated production task;
(f) evaluating the quality of the welder's performance of the indicated production task based on the process variable control targets and acceptability limits;
(g) storing data gathered from the evaluation of the performance of the indicated production task,
and the method is **characterised in that**:
the welding system further includes: (a) a data generating component, wherein the data generating component further includes: (i) a fixture, wherein the geometric characteristics of the fixture are predetermined; (ii) a workpiece adapted to be mounted on the fixture, wherein the workpiece includes at least one joint to be welded, and wherein the vector extending along the joint to be welded defines an operation path; (iii) at least one calibration device, wherein each calibration device further includes at least two point markers integral therewith, and wherein the geometric relationship between the point markers and the operation path is predetermined; and (iv) a welding tool, wherein the welding tool is operative to form a weld at the joint to be welded, wherein the welding tool defines a tool point and a tool vector, and wherein the welding tool further includes a target attached to the welding tool, wherein the target further includes a plurality of point markers mounted thereon in a predetermined pattern, and wherein the predetermined pattern of point markers is operative to define a rigid body; and (b) a data capturing component, wherein the data capturing component further includes an imaging system for capturing images of the point markers; and (c) a data processing component, wherein the data processing component is operative to receive information from the data capturing component and then calculate: (i) the position and orientation of the operation path relative to the three-dimensional space viewable by the imaging system; (ii) the position of the tool point and orientation of the tool vector relative to the rigid body; and (iii) the position of the tool point and orientation of the tool vector relative to the operation path,
wherein the production task to be completed on the part further includes form variables and execution variables; wherein the form variables further include process type, joint type, position, material, thickness, electrode type, root gap, root landing, and included angle; and wherein the execution variables further include polarity, work angle, travel angle, arc length, travel speed, tool placement, current, voltage, weld length, and weld size.

2. The method according to claim 1, **characterized in** further comprising; (f) providing real-time feedback to the welder performing the indicated production task; (h) requiring remedial action with regard to the quality of the performance of the indicated production task.

3. The method according to claim 2, **characterized in that** the part information further includes part variables and task variables; and/or that the production task to be completed on the part further includes form variables and execution variables; and/or that real-time feedback further includes automated audio feedback or augmented reality weld rendering; the method further comprising the quality evaluation beeing further based on performance measurements, numerical quality simulations; direct quality measurements; or combinations thereof; (h) requiring remedial action with regard to the quality of the performance of the indicated production task, wherein the remedial action is either a disparate production task or a request to complete an active indicated production task; and (i) storing data gathered from the evaluation of the performance of the indicated production task.

4. The method of any of the claims 1 to 3, **characterized in that** the welding system is in communication with at least one cloud-based server.

5. The method of any of the claims 1 to 4, **characterized in that** the part information further includes part variables and task variables; wherein the part variables further include part name or identification, at least one solid model of the part, and a list of tasks to be completed on the part; and wherein the task variables further include task name or identification, operation path or locations, operation directions, and other task specific variables.

6. The method of any of the claims 1 to 5, **characterized in that** the real-time feedback further includes automated audio feedback, and wherein automated audio feedback provides real-time feedback to the welder through various automated voice commands.

7. The method of any of the claims 1 to 6, **characterized in that** the real-time feedback further includes augmented reality weld rendering, wherein augmented reality weld rendering further includes the use of sensors that provide real-time position and orientation values of both a welding helmet and a welding tool in addition to processing data to a cloud-based server, wherein the server performs rendering calculations or finite element calculations, and wherein image data is generated based on these calculations and is superimposed over a welder's view of a welding joint during performing the indicated production task.

8. The method of any of the claims 1 to 7, **characterized in that** evaluating the quality of the welder's performance of the indicated production task is performance based, and wherein the performance-based evaluation uses direct performance measurements compared to preset control limits to make a quality determination along the operation path.

9. The method of any of the claims 1 to 8, **characterized in that** evaluating the quality of the welder's performance of the indicated production task is based on numerical quality simulations, and wherein numerical quality simulations use tool manipulation and process measurements to calculate probabilities of defect formation as a function of position along the operation path.

10. The method of any of the claims 1 to 9, **characterized in that** evaluating the quality of the welder's performance of the indicated production task is based on direct quality measurements, and wherein direct quality measurements are taken from sensor tools which physically measure for the presence of weld defects.

11. The method of any of the claims 1 to 10, **characterized in that** the remedial action is either a disparate production task or a request to complete an active indicated production task.

12. The method of any of the claims 1 to 11, **characterized in that** the part variables further include part name or identification, at least one solid model of the part, and a list of tasks to be completed on the part; and wherein the task variables further include task name or identification, operation path or locations, operation directions, and other task specific variables.

13. The method of any of the claims 1 to 12, **characterized in that** the form variables further include process type, joint type, position, material, thickness, electrode type, root gap, root landing, and included angle; and wherein the execution variables further include polarity, work angle, travel angle, arc length, travel speed, tool placement, current, voltage, weld length, and weld size.

14. The method of any of the claims 1 to 13, **characterized in that** automated audio feedback provides real-time feedback to the welder through various automated voice commands.

15. The method of any of the claims 1 to 14, **characterized in that** augmented reality weld rendering further includes the use of sensors that provide real-time position and orientation values of both a welding helmet and a welding tool in addition to processing data to a cloud-based server, wherein the server performs rendering calculations or finite element calculations, and wherein image data is generated based on these calculations and is superimposed over a welder's view of a welding joint during performing the indicated production task.

16. The method of any of the claims 1 to 15, **characterized in that** the performance-based evaluation uses direct performance measurements compared to preset control limits to make a quality determination along the operation path.

17. The method of any of the claims 1 to 16, **characterized in that** numerical quality simulations use tool manipulation and process measurements to calculate probabilities of defect formation as a function of position along the operation path.

18. The method of any of the claims 1 to 17, **characterized in that** direct quality measurements are taken from sensor tools which physically measure for the presence of weld defects.

19. A system (100) for monitoring and characterizing manual welding, the system (100) comprising both hardware and software components, wherein the hardware and software are operative to gather and process data in real time, and wherein the data is derived from an actual welding exercise conducted by a welder,
wherein the system with part information, process variable control targets, and acceptability limits is provided (110);
wherein a part to be welded from the part information is selected (120);
wherein a production task to be completed on the selected part is indicated (130);
wherein the indicated production task is performed;
wherein the quality of the welder's performance of the indicated production task based on the process variable control targets and acceptability limits is evaluated (140, 150); wherein data gathered from the evaluation of the performance of the indicated production task is stored;
and **characterised in that**:
the welding system further includes: (a) a data generating component, wherein the data generating component further includes: (i) a fixture, wherein the geometric characteristics of the fixture are predetermined; (ii) a workpiece adapted to be mounted on the fixture, wherein the workpiece includes at least one joint to be welded, and wherein the vector extending along the joint to be welded defines an operation path; (iii) at least one calibration device, wherein each calibration device further includes at least two point markers integral therewith, and wherein the geometric relationship between the point markers and the operation path is predetermined; and (iv) a welding tool, wherein the welding tool is operative to form a weld at the joint to be welded, wherein the welding tool defines a tool point and a tool vector, and wherein the welding tool further includes a target attached to the welding tool, wherein the target further includes a plurality of point markers mounted thereon in a predetermined pattern, and wherein the predetermined pattern of point markers is operative to define a rigid body; and (b) a data capturing component, wherein the data capturing component further includes an imaging system (300) for capturing images of the point markers; and (c) a data processing component, wherein the data processing component is operative to receive information from the data capturing component and then calculate: (i) the position and orientation of the operation path relative to the three-dimensional space viewable by the imaging system (300); (ii) the position of the tool point and orientation of the tool vector relative to the rigid body; and (iii) the position of the tool point and orientation of the tool vector relative to the operation path,
wherein the production task to be completed on the part further includes form variables and execution variables; wherein the form variables further include process type, joint type, position, material, thickness, electrode type, root gap, root landing, and included angle; and wherein the execution variables further include polarity, work angle, travel angle, arc length, travel speed, tool placement, current, voltage, weld length, and weld size.

20. The system (100) according to claim 19, **characterized in that** real-time feedback to the welder performing the indicated production task is provided, and/or that remedial action with regard to the quality of the performance of the indicated production task is required.

21. The system (100) according to claim 19 or 20, **characterized in that** the part information further includes part variables and task variables; (c) selecting a part to be welded from the part information; (d) indicating a production task to be completed on the selected part, wherein the production task to be completed on the part further includes form variables and execution variables; (e) performing the indicated production task; (f) providing real-time feedback to the welder performing the indicated production task, wherein real-time feedback further includes automated audio feedback or augmented reality weld rendering; (g) evaluating the quality of the welder's performance of the indicated production task based on the process variable control targets and acceptability limits, and wherein the quality evaluation is further based on performance measurements, numerical quality simulations; direct quality measurements; or combinations thereof; (h) requiring remedial action with regard to the quality of the performance of the indicated production task, wherein the remedial action is either a disparate production task or a request to complete an active indicated production task; and (i) storing data gathered from the evaluation of the performance of the indicated production task.

22. The system (100) according to any of the claims 19 to 21, **characterized in that** evaluating the quality of the welder's performance of the indicated production task is performance based, and that the performance-based evaluation uses direct performance measurements compared to preset control limits to make a quality determination along the operation path.

23. The system (100) according to any of the claims 19 to 22, **characterized in that** evaluating the quality of the welder's performance of the indicated production task is based on numerical quality simulations, and wherein numerical quality simulations use tool manipulation and process measurements to calculate probabilities of defect formation as a function of position along the operation path.

24. The system (100) according to any of the claims 19 or 23, **characterized in that** evaluating the quality of the welder's performance of the indicated production task is based on direct quality measurements, and that direct quality measurements are taken from sensor tools which physically measure for the presence of weld defects.

25. The system (100) according to any of the claims 19 or 24, **characterized in that** the remedial action is either a disparate production task or a request to complete an active indicated production task.

26. The system (100) according to any of the claims 19 or 25, **characterized in that** the part variables further include part name or identification, at least one solid model of the part, and a list of tasks to be completed on the part; and that the task variables further include task name or identification, operation path or locations, operation directions, and other task specific variables.

27. The system (100) according to any of the claims 19 or 26, **characterized in that** automated audio feedback provides real-time feedback to the welder through various automated voice commands.

28. The system (100) according to any of the claims 19 or 27, **characterized in that** augmented reality weld rendering further includes the use of sensors that provide real-time position and orientation values of both a welding helmet and a welding tool in addition to processing data to a cloud-based server, wherein the server performs rendering calculations or finite element calculations, and wherein image data is generated based on these calculations and is superimposed over a welder's view of a welding joint during performing the indicated production task.

29. The system (100) according to any of the claims 19 or 28, **characterized in that** the performance-based evaluation uses direct performance measurements compared to preset control limits to make a quality determination along the operation path.

30. The system (100) according to any of the claims 19 or 29, **characterized in that** direct quality measurements are taken from sensor tools which physically measure for the presence of weld defects.

## Patentansprüche

1. Verfahren zur Überwachung und Charakterisierung von manuellem Schweißen, wobei das Verfahren Folgendes umfasst:
(a) Bereitstellen eines Schweißsystems, wobei das Schweißsystem des Weiteren sowohl Hardware- als auch Software-Komponenten enthält, wobei die Hardware und die Software dafür ausgelegt sind, Daten in Echtzeit zu erfassen und zu verarbeiten, und wobei die Daten aus einer tatsächlichen Schweißübung abgeleitet werden, die durch einen Schweißer ausgeführt wird;
(b) Einspeisen, in das System, von Teil-Informationen, Prozessvariablenkontrollzielen und Annehmbarkeitsgrenzen;
(c) Auswählen eines zu schweißenden Teils aus den Teil-Informationen;
(d) Anzeigen einer Produktionsaufgabe, die an dem ausgewählten Teil zu vollenden ist;
(e) Ausführen der angezeigten Produktionsaufgabe;
(f) Beurteilen der Qualität der Leistung des Schweißers bei der Bewältigung der angezeigten Produktionsaufgabe auf der Basis der Prozessvariablenkontrollziele und Annehmbarkeitsgrenzen;
(g) Speichern von Daten, die aus der Beurteilung der Leistung bei der Bewältigung der angezeigten Produktionsaufgabe gewonnen werden, wobei das Verfahren **dadurch gekennzeichnet ist, dass**:
das Schweißsystem des Weiteren Folgendes enthält: (a) eine Datengenerierungskomponente, wobei die Datengenerierungskomponente des Weiteren Folgendes enthält: (i) eine Aufspannvorrichtung, wobei die geometrischen Charakteristika der Aufspannvorrichtung zuvor festgelegt sind; (ii) ein Werkstück, das dafür ausgelegt ist, auf der Aufspannvorrichtung montiert zu werden, wobei das Werkstück mindestens eine zu schweißende Fuge enthält, und wobei der Vektor, der sich entlang der zu schweißenden Fuge erstreckt, einen Operationspfad definiert; (iii) mindestens eine Kalibrierungsvorrichtung, wobei jede Kalibrierungsvorrichtung des Weiteren mindestens zwei integral damit ausgebildete Punktmarker enthält, und wobei die geometrische Beziehung zwischen den Punktmarkern und dem Operationspfad zuvor festgelegt ist; und (iv) ein Schweißwerkzeug, wobei das Schweißwerkzeug dafür ausgelegt ist, eine Schweißnaht an der zu schweißenden Fuge zu bilden, wobei das Schweißwerkzeug einen Werkzeugpunkt und einen Werkzeugvektor definiert, und wobei das Schweißwerkzeug des Weiteren ein Ziel enthält, das an dem Schweißwerkzeug angebracht ist, wobei das Ziel des Weiteren mehrere Punktmarker enthält, die darauf in einem zuvor festgelegten Muster montiert sind, und wobei das zuvor festgelegte Muster von Punktmarkern dafür ausgelegt ist, einen starren Körper zu definieren; und (b) eine Datenerfassungskomponente, wobei die Datenerfassungskomponente des Weiteren ein Bildgabesystem zum Aufnehmen von Bildern der Punktmarker enthält; und (c) eine Datenverarbeitungskomponente, wobei die Datenverarbeitungskomponente dafür ausgelegt ist, Informationen von der Datenerfassungskomponente zu empfangen und dann zu berechnen: (i) die Position und Ausrichtung des Operationspfades relativ zum dreidimensionalen Raum, den das Bildgabesystem sehen kann; (ii) die Position des Werkzeugpunktes und die Ausrichtung des Werkzeugvektors relativ zu dem starren Körper; und (iii) die Position des Werkzeugpunktes und die Ausrichtung des Werkzeugvektors relativ zu dem Operationspfad, wobei die Produktionsaufgabe, die an dem Teil zu vollenden ist, des Weiteren Formvariablen und Ausführungsvariablen enthält; wobei die Formvariablen des Weiteren enthalten: Prozesstyp, Fugentyp, Position, Material, Dicke, Elektrodentyp, Wurzelöffnung, Wurzelauflage und Öffnungswinkel; und
wobei die Ausführungsvariablen des Weiteren enthalten: Polarität, Arbeitswinkel, Vorschubwinkel, Lichtbogenlänge, Vorschubgeschwindigkeit, Werkzeugplatzierung, Strom, Spannung, Schweißnahtlänge und Schweißnahtgröße.

2. Verfahren nach Anspruch 1, **dadurch gekennzeichnet, dass** es des Weiteren Folgendes umfasst: (f) Übermitteln einer Echtzeit-Rückmeldung an den Schweißer, der die angezeigte Produktionsaufgabe ausführt; (h) Verlangen von Korrekturmaßnahmen mit Bezug auf die Qualität der Leistung bei der Bewältigung der angezeigten Produktionsaufgabe.

3. Verfahren nach Anspruch 2, **dadurch gekennzeichnet, dass** die Teil-Informationen des Weiteren Teilvariablen und Aufgabenvariablen enthalten; und/oder dass die Produktionsaufgabe, die an dem Teil zu vollenden ist, des Weiteren Formvariablen und Ausführungsvariablen enthält; und/oder dass die Echtzeit-Rückmeldung des Weiteren eine automatisierte Audio-Rückmeldung oder ein Augmented-Reality-Schweißnaht-Rendering enthält; wobei das Verfahren des Weiteren umfasst, dass die Qualitätsbeurteilung des Weiteren auf Leistungsmessungen, numerischen Qualitätssimulationen; direkten Qualitätsmessungen; oder Kombinationen davon basiert; (h) Verlangen von Korrekturmaßnahmen mit Bezug auf die Qualität der Leistung bei der Bewältigung der angezeigten Produktionsaufgabe, wobei die Korrekturmaßnahmen entweder eine anders geartete Produktionsaufgabe oder eine Aufforderung zum Vollenden einer aktiven angezeigten Produktionsaufgabe sind; und (i) Speichern von Daten, die aus der Beurteilung der Leistung bei der Bewältigung der angezeigten Produktionsaufgabe gewonnen werden.

4. Verfahren nach einem der Ansprüche 1 bis 3, **dadurch gekennzeichnet, dass** das Schweißsystem mit mindestens einem Cloud-basierten Server kommuniziert.

5. Verfahren nach einem der Ansprüche 1 bis 4, **dadurch gekennzeichnet, dass** die Teil-Informationen des Weiteren Teilvariablen und Aufgabenvariablen enthalten; wobei die Teilvariablen des Weiteren enthalten: Teil-Bezeichnung oder -Identifikation, mindestens ein massives Modell des Teils, und eine Liste von Aufgaben, die an dem Teil zu vollenden sind; und wobei die Aufgabenvariablen des Weiteren enthalten: Aufgaben-Bezeichnung oder -Identifikation, Operationspfad oder -positionen, Operationsrichtungen, und andere aufgabenspezifische Variablen.

6. Verfahren nach einem der Ansprüche 1 bis 5, **dadurch gekennzeichnet, dass** die Echtzeit-Rückmeldung des Weiteren eine automatisierte Audio-Rückmeldung enthält, und wobei die automatisierte Audio-Rückmeldung eine Echtzeit-Rückmeldung an den Schweißer durch verschiedene automatisierte Sprachbefehle übermittelt.

7. Verfahren nach einem der Ansprüche 1 bis 6, **dadurch gekennzeichnet, dass** die Echtzeit-Rückmeldung des Weiteren Augmented-Reality-Schweißnaht-Rendering enthält, wobei Augmented-Reality-Schweißnaht-Rendering des Weiteren die Verwendung von Sensoren enthält, die Echtzeit-Positions- und Ausrichtungswerte sowohl einer Schweißhaube als auch eines Schweißwerkzeugs zusätzlich zu Verarbeitungsdaten an einen Cloud-basierten Server übermitteln, wobei der Server Rendering-Berechnungen oder Finite-Elemente-Berechnungen ausführt, und wobei Bilddaten auf der Basis dieser Berechnungen generiert werden und über die Sicht eines Schweißers auf eine Schweißfuge gelegt werden, während die angezeigte Produktionsaufgabe ausgeführt wird.

8. Verfahren nach einem der Ansprüche 1 bis 7, **dadurch gekennzeichnet, dass** das Beurteilen der Qualität der Leistung des Schweißers bei der Bewältigung der angezeigten Produktionsaufgabe leistungsbasiert ist, und wobei die leistungsbasierte Beurteilung direkte Leistungsmessungen im Vergleich zu voreingestellten Kontrollgrenzen verwendet, um eine Qualitätsbestimmung entlang des Operationspfades vorzunehmen.

9. Verfahren nach einem der Ansprüche 1 bis 8, **dadurch gekennzeichnet, dass** das Beurteilen der Qualität der Leistung des Schweißers bei der Bewältigung der angezeigten Produktionsaufgabe auf numerischen Qualitätssimulationen basiert, und wobei numerische Qualitätssimulationen Werkzeugmanipulations- und Prozessmessungen verwenden, um Wahrscheinlichkeiten der Entstehung von Defekten als eine Funktion der Position entlang des Operationspfades zu berechnen.

10. Verfahren nach einem der Ansprüche 1 bis 9, **dadurch gekennzeichnet, dass** das Beurteilen der Qualität der Leistung des Schweißers bei der Bewältigung der angezeigten Produktionsaufgabe auf direkten Qualitätsmessungen basiert, und wobei direkte Qualitätsmessungen von Sensorwerkzeugen genommen werden, die physisch das Vorhandensein von Schweißdefekten messen.

11. Verfahren nach einem der Ansprüche 1 bis 10, **dadurch gekennzeichnet, dass** die Korrekturmaßnahmen entweder eine anders geartete Produktionsaufgabe oder eine Aufforderung zum Vollenden einer aktiven angezeigten Produktionsaufgabe sind.

12. Verfahren nach einem der Ansprüche 1 bis 11, **dadurch gekennzeichnet, dass** die Teilvariablen des Weiteren enthalten: Teil-Bezeichnung oder -Identifikation, mindestens ein massives Modell des Teils, und eine Liste von Aufgaben, die an dem Teil zu vollenden sind; und wobei die Aufgabenvariablen des Weiteren enthalten: Aufgaben-Bezeichnung oder -Identifikation, Operationspfad oder -positionen, Operationsrichtungen, und andere aufgabenspezifische Variablen.

13. Verfahren nach einem der Ansprüche 1 bis 12, **dadurch gekennzeichnet, dass** die Formvariablen des Weiteren enthalten: Prozesstyp, Fugentyp, Position, Material, Dicke, Elektrodentyp, Wurzelöffnung, Wurzelauflage und Öffnungswinkel; und wobei die Ausführungsvariablen des Weiteren enthalten: Polarität, Arbeitswinkel, Vorschubwinkel, Lichtbogenlänge, Vorschubgeschwindigkeit, Werkzeugplatzierung, Strom, Spannung, Schweißnahtlänge und Schweißnahtgröße.

14. Verfahren nach einem der Ansprüche 1 bis 13, **dadurch gekennzeichnet, dass** die automatisierte Audio-Rückmeldung eine Echtzeit-Rückmeldung an den Schweißer durch verschiedene automatisierte Sprachbefehle übermittelt.

15. Verfahren nach einem der Ansprüche 1 bis 14, **dadurch gekennzeichnet, dass** Augmented-Reality-Schweißnaht-Rendering des Weiteren die Verwendung von Sensoren enthält, die Echtzeit-Positions- und Ausrichtungswerte sowohl einer Schweißhaube als auch eines Schweißwerkzeugs zusätzlich zu Verarbeitungsdaten an einen Cloud-basierten Server übermitteln, wobei der Server Rendering-Berechnungen oder Finite-Elemente-Berechnungen ausführt, und wobei Bilddaten auf der Basis dieser Berechnungen generiert werden und über die Sicht eines Schweißers auf eine Schweißfuge gelegt werden, während die angezeigte Produktionsaufgabe ausgeführt wird.

16. Verfahren nach einem der Ansprüche 1 bis 15, **dadurch gekennzeichnet, dass** die leistungsbasierte Beurteilung direkte Leistungsmessungen im Vergleich zu voreingestellten Kontrollgrenzen verwendet, um eine Qualitätsbestimmung entlang des Operationspfades vorzunehmen.

17. Verfahren nach einem der Ansprüche 1 bis 16, **dadurch gekennzeichnet, dass** numerische Qualitätssimulationen Werkzeugmanipulations- und Prozessmessungen verwenden, um Wahrscheinlichkeiten der Entstehung von Defekten als eine Funktion der Position entlang des Operationspfades zu berechnen.

18. Verfahren nach einem der Ansprüche 1 bis 17, **dadurch gekennzeichnet, dass** direkte Qualitätsmessungen von Sensorwerkzeugen genommen werden, die physisch das Vorhandensein von Schweißdefekten messen.

19. System (100) für die Überwachung und Charakterisierung von manuellem Schweißen, wobei das System (100) sowohl Hardware- als auch Software-Komponenten umfasst, wobei die Hardware und Software dafür ausgelegt sind, Daten in Echtzeit zu erfassen und zu verarbeiten, und wobei die Daten aus einer tatsächlichen Schweißübung abgeleitet werden, die durch einen Schweißer ausgeführt wird, wobei in das System Teil-Informationen, Prozessvariablensteuerungsziele und Annehmbarkeitsgrenzen eingespeist werden (110); wobei ein zu schweißendes Teil aus den Teil-Informationen ausgewählt wird (120); wobei eine Produktionsaufgabe, die an dem ausgewählten Teil zu vollenden ist, angezeigt wird (130); wobei die angezeigte Produktionsaufgabe ausgeführt wird; wobei die Qualität der Leistung des Schweißers bei der Bewältigung der angezeigten Produktionsaufgabe auf der Basis der Prozessvariablensteuerungsziele und Annehmbarkeitsgrenzen beurteilt wird (140, 150); wobei Daten, die aus der Beurteilung der Leistung bei der Bewältigung der angezeigten Produktionsaufgabe gewonnen werden, gespeichert werden; und **dadurch gekennzeichnet dass**: das Schweißsystem des Weiteren Folgendes enthält: (a) eine Datengenerierungskomponente, wobei die Datengenerierungskomponente des Weiteren Folgendes enthält: (i) eine Aufspannvorrichtung, wobei die geometrischen Charakteristika der Aufspannvorrichtung zuvor festgelegt sind; (ii) ein Werkstück, das dafür ausgelegt ist, auf der Aufspannvorrichtung montiert zu werden, wobei das Werkstück mindestens eine zu schweißende Fuge enthält, und wobei der Vektor, der sich entlang der zu schweißenden Fuge erstreckt, einen Operationspfad definiert; (iii) mindestens eine Kalibrierungsvorrichtung, wobei jede Kalibrierungsvorrichtung des Weiteren mindestens zwei integral damit ausgebildete Punktmarker enthält, und wobei die geometrische Beziehung zwischen den Punktmarkern und dem Operationspfad zuvor festgelegt ist; und (iv) ein Schweißwerkzeug, wobei das Schweißwerkzeug dafür ausgelegt ist, eine Schweißnaht an der zu schweißenden Fuge zu bilden, wobei das Schweißwerkzeug einen Werkzeugpunkt und einen Werkzeugvektor definiert, und wobei das Schweißwerkzeug des Weiteren ein Ziel enthält, das an dem Schweißwerkzeug angebracht ist, wobei das Ziel des Weiteren mehrere Punktmarker enthält, die darauf in einem zuvor festgelegten Muster montiert sind, und wobei das zuvor festgelegte Muster von Punktmarkern dafür ausgelegt ist, einen starren Körper zu definieren; und (b) eine Datenerfassungskomponente, wobei die Datenerfassungskomponente des Weiteren ein Bildgabesystem (300) zum Aufnehmen von Bildern der Punktmarker enthält; und (c) eine Datenverarbeitungskomponente, wobei die Datenverarbeitungskomponente dafür ausgelegt ist, Informationen von der Datenerfassungskomponente zu empfangen und dann zu berechnen: (i) die Position und Ausrichtung des Operationspfades relativ zum dreidimensionalen Raum, den das Bildgabesystem (300) sehen kann; (ii) die Position des Werkzeugpunktes und die Ausrichtung des Werkzeugvektors relativ zu dem starren Körper; und (iii) die Position des Werkzeugpunktes und die Ausrichtung des Werkzeugvektors relativ zu dem Operationspfad,wobei die Produktionsaufgabe, die an dem Teil zu vollenden ist, des Weiteren Formvariablen und Ausführungsvariablen enthält;wobei die Formvariablen des Weiteren enthalten: Prozesstyp, Fugentyp, Position, Material, Dicke, Elektrodentyp, Wurzelöffnung, Wurzelauflage und Öffnungswinkel; undwobei die Ausführungsvariablen des Weiteren enthalten: Polarität, Arbeitswinkel, Vorschubwinkel, Lichtbogenlänge, Vorschubgeschwindigkeit, Werkzeugplatzierung, Strom, Spannung, Schweißnahtlänge und Schweißnahtgröße.

20. System (100) nach Anspruch 19, **dadurch gekennzeichnet, dass** eine Echtzeit-Rückmeldung an den Schweißer, der die angezeigte Produktionsaufgabe ausführt, erfolgt, und/oder dass Korrekturmaßnahmen mit Bezug auf die Qualität der Leistung bei der Bewältigung der angezeigten Produktionsaufgabe verlangt werden.

21. System (100) nach Anspruch 19 oder 20, **dadurch gekennzeichnet, dass** die Teil-Informationen des Weiteren Teilvariablen und Aufgabenvariablen enthalten; (c) Auswählen eines zu schweißendes Teil aus den Teil-Informationen; (d) Anzeigen einer Produktionsaufgabe, die an dem ausgewählten Teil zu vollenden ist, wobei die Produktionsaufgabe, die an dem Teil zu vollenden ist, des Weiteren Formvariablen und Ausführungsvariablen enthält; (e) Ausführen der angezeigten Produktionsaufgabe; (f) Übermitteln einer Echtzeit-Rückmeldung an den Schweißer, der die angezeigte Produktionsaufgabe ausführt, wobei die Echtzeit-Rückmeldung des Weiteren eine automatisierte Audio-Rückmeldung oder ein Augmented-Reality-Schweißnaht-Rendering enthält; (g) Beurteilen der Qualität der Leistung des Schweißers bei der Bewältigung der angezeigten Produktionsaufgabe auf der Basis der Prozessvariablensteuerungsziele und Annehmbarkeitsgrenzen, und wobei die Qualitätsbeurteilung des Weiteren auf Leistungsmessungen, numerischen Qualitätssimulationen; direkten Qualitätsmessungen; oder Kombinationen davon basiert; (h) Verlangen von Korrekturmaßnahmen mit Bezug auf die Qualität der Leistung bei der Bewältigung der angezeigten Produktionsaufgabe, wobei die Korrekturmaßnahmen entweder eine anders geartete Produktionsaufgabe oder eine Aufforderung zum Vollenden einer aktiven angezeigten Produktionsaufgabe sind; (i) Speichern von Daten, die aus der Beurteilung der Leistung bei der Bewältigung der angezeigten Produktionsaufgabe gewonnen werden.

22. System (100) nach einem der Ansprüche 19 bis 21, **dadurch gekennzeichnet, dass** das Beurteilen der Qualität der Leistung des Schweißers bei der Bewältigung der angezeigten Produktionsaufgabe leistungsbasiert ist, und dass die leistungsbasierte Beurteilung direkte Leistungsmessungen im Vergleich zu voreingestellten Kontrollgrenzen verwendet, um eine Qualitätsbestimmung entlang des Operationspfades vorzunehmen.

23. System (100) nach einem der Ansprüche 19 bis 22, **dadurch gekennzeichnet, dass** das Beurteilen der Qualität der Leistung des Schweißers bei der Bewältigung der angezeigten Produktionsaufgabe auf numerischen Qualitätssimulationen basiert, und wobei numerische Qualitätssimulationen Werkzeugmanipulations- und Prozessmessungen verwenden, um Wahrscheinlichkeiten der Entstehung von Defekten als eine Funktion der Position entlang des Operationspfades zu berechnen.

24. System (100) nach einem der Ansprüche 19 oder 23, **dadurch gekennzeichnet, dass** das Beurteilen der Qualität der Leistung des Schweißers bei der Bewältigung der angezeigten Produktionsaufgabe auf direkten Qualitätsmessungen basiert, und dass direkte Qualitätsmessungen von Sensorwerkzeugen genommen werden, die physisch das Vorhandensein von Schweißdefekten messen.

25. System (100) nach einem der Ansprüche 19 oder 24, **dadurch gekennzeichnet, dass** die Korrekturmaßnahmen entweder eine anders geartete Produktionsaufgabe oder eine Aufforderung zum Vollenden einer aktiven angezeigten Produktionsaufgabe sind.

26. System (100) nach einem der Ansprüche 19 oder 25, **dadurch gekennzeichnet, dass** die Teilvariablen des Weiteren Teil-Bezeichnung oder -Identifikation, mindestens ein massives Modell des Teils, und eine Liste von Aufgaben, die an dem Teil zu vollenden sind, enthalten; und dass die Aufgabenvariablen des Weiteren Aufgaben-Bezeichnung oder -Identifikation, Operationspfad oder -positionen, Operationsrichtungen, und andere aufgabenspezifische Variablen enthalten.

27. System (100) nach einem der Ansprüche 19 oder 26, **dadurch gekennzeichnet, dass** die automatisierte Audio-Rückmeldung eine Echtzeit-Rückmeldung an den Schweißer durch verschiedene automatisierte Sprachbefehle übermittelt.

28. System (100) nach einem der Ansprüche 19 oder 27, **dadurch gekennzeichnet, dass** das Augmented-Reality-Schweißnaht-Rendering des Weiteren die Verwendung von Sensoren enthält, die Echtzeit-Positions- und Ausrichtungswerte sowohl einer Schweißhaube als auch eines Schweißwerkzeugs zusätzlich zu Verarbeitungsdaten an einen Cloud-basierten Server übermitteln, wobei der Server Rendering-Berechnungen oder Finite-Elemente-Berechnungen ausführt, und wobei Bilddaten auf der Basis dieser Berechnungen generiert werden und über die Sicht eines Schweißers auf eine Schweißfuge gelegt werden, während die angezeigte Produktionsaufgabe ausgeführt wird.

29. System (100) nach einem der Ansprüche 19 oder 28, **dadurch gekennzeichnet, dass** die leistungsbasierte Beurteilung direkte Leistungsmessungen im Vergleich zu voreingestellten Kontrollgrenzen verwendet, um eine Qualitätsbestimmung entlang des Operationspfades vorzunehmen.

30. System (100) nach einem der Ansprüche 19 oder 29, **dadurch gekennzeichnet, dass** direkte Qualitätsmessungen von Sensorwerkzeugen genommen werden, die physisch das Vorhandensein von Schweißdefekten messen.

## Revendications

1. Procédé de surveillance et de caractérisation de soudage manuel, comprenant :
(a) la fourniture d'un système de soudage, dans lequel le système de soudage inclut en outre à la fois des composants matériels et logiciels, dans lequel les composants matériels et logiciels sont opérationnels pour recueillir et traiter des données en temps réel, et dans lequel les données sont dérivées d'un exercice de soudage réel conduit par un soudeur :
(b) la fourniture, au système, d'informations de pièce, d'objectifs de commande de variables de processus et de limites d'acceptabilité ;
(c) la sélection d'une pièce à souder à partir des informations de pièce ;
(d) l'indication d'une tâche de production à réaliser sur la pièce sélectionnée ;
(e) la réalisation de la tâche de production indiquée ;
(f) l'évaluation de la qualité de la réalisation de la tâche de production indiquée par le soudeur sur la base des objectifs de commande de variables de processus et des limites d'acceptabilité ;
(g) la mémorisation des données recueillies à partir de l'évaluation de la réalisation de la tâche de production indiquée,
et le procédé est **caractérisé en ce que** :
le système de soudage inclut en outre : (a) un composant de génération de données, dans lequel le composant de génération de données inclut en outre :
(i) une fixation, dans lequel les caractéristiques géométriques de la fixation sont prédéterminées ;
(ii) une pièce d'ouvrage apte à être montée sur la fixation, dans lequel la pièce d'ouvrage inclut au moins un joint à souder, et dans lequel le vecteur s'étendant le long du joint à souder définit une voie d'opération ; (iii) au moins un dispositif d'étalonnage, dans lequel chaque dispositif d'étalonnage inclut en outre au moins deux marqueurs de point faisant partie intégrante de celui-ci, et dans lequel la relation géométrique entre les marqueurs de point et la voie d'opération est prédéterminée ; et (iv) un outil de soudage, dans lequel l'outil de soudage est opérationnel pour former une soudure au joint à souder, dans lequel l'outil de soudage définit un point d'outil et un vecteur d'outil, et dans lequel l'outil de soudage inclut en outre une cible attachée à l'outil de soudage, dans lequel la cible inclut en outre une pluralité de marqueurs de point montés sur celle-ci dans un motif prédéterminé, et dans lequel le motif prédéterminé des marqueurs de point est opérationnel pour définir un corps rigide ; et (b) un composant d'acquisition de données, dans lequel le composant d'acquisition de données inclut en outre un système d'imagerie pour l'acquisition d'images des marqueurs de point ; et (c) un composant de traitement de données, dans lequel le composant de traitement de données est opérationnel pour recevoir des informations en provenance du composant d'acquisition de données puis pour calculer : (i) la position et l'orientation de la voie d'opération par rapport à l'espace tridimensionnel visible par le système d'imagerie ; (ii) la position du point d'outil et l'orientation du vecteur d'outil par rapport au corps rigide ; et (iii) la position du point d'outil et l'orientation du vecteur d'outil par rapport à la voie d'opération,
dans lequel la tâche de production à réaliser sur la pièce inclut en outre des variables de forme et des variables d'exécution ; dans lequel les variables de forme incluent en outre un type de processus, un type de joint, une position, un matériau, une épaisseur, un type d'électrode, un écart de racine, un palier de racine, et un angle inclus ; et dans lequel les variables d'exécution incluent en outre une polarité, un angle de travail, un angle de déplacement, une longueur d'arc, une vitesse de déplacement, un placement d'outil, une intensité, une tension, une longueur de soudure, et une taille de soudure.

2. Procédé selon la revendication 1, **caractérisé en ce qu'**il comprend en outre : (f) la fourniture d'une rétroaction en temps réel au soudeur réalisant la tâche de production indiquée ; (h) l'exigence d'une action corrective en ce qui concerne la qualité de la réalisation de la tâche de production indiquée.

3. Procédé selon la revendication 2, **caractérisé en ce que** les informations de pièce incluent en outre des variables de pièces et des variables de tâche ; et/ou **en ce que** la tâche de production à réaliser sur la pièce inclut en outre des variables de forme et des variables d'exécution ; et/ou **en ce que** la rétroaction en temps réel inclut en outre une rétroaction audio automatisée ou un rendu de soudage en réalité augmentée ; le procédé comprenant en outre l'évaluation de qualité qui est en outre basée sur des mesures de performances, des simulations de qualité numériques, des mesures de qualité directes, ou des combinaisons de celles-ci ; (h) l'exigence d'une action corrective en ce qui concerne la qualité de la réalisation de la tâche de production indiquée, dans lequel l'action corrective est soit une tâche de production disparate soit une demande de réalisation d'une tâche de production indiquée active ; et (i) la mémorisation de données recueillies à partir de l'évaluation de la réalisation de la tâche de production indiquée.

4. Procédé selon l'une quelconque des revendications 1 à 3, **caractérisé en ce que** le système de soudage est en communication avec au moins un serveur basé sur le cloud.

5. Procédé selon l'une quelconque des revendications 1 à 4, **caractérisé en ce que** les informations de pièce incluent en outre des variables de pièce et des variables de tâche ; dans lequel les variables de pièce incluent en outre un nom ou une identification de pièce, au moins un modèle solide de la pièce, et une liste de tâches à réaliser sur la pièce ; et dans lequel les variables de tâche incluent en outre un nom ou une identification de tâche, une voie d'opération ou des emplacements d'opération, des directions d'opération, et d'autres variables spécifiques à la tâche.

6. Procédé selon l'une quelconque des revendications 1 à 5, **caractérisé en ce que** la rétroaction en temps réel inclut en outre une rétroaction audio automatisée, et dans lequel la rétroaction audio automatisée fournit une rétroaction en temps réel au soudeur par l'intermédiaire de diverses commandes vocales automatisées.

7. Procédé selon l'une quelconque des revendications 1 à 6, **caractérisé en ce que** la rétroaction en temps réel inclut en outre un rendu de soudage en réalité augmentée, dans lequel le rendu de soudage en réalité augmentée inclut en outre l'utilisation de capteurs qui fournissent des valeurs de position et d'orientation en temps réel d'un casque de soudage et d'un outil de soudage en plus de données de traitement à un serveur basé sur le cloud, dans lequel le serveur effectue des calculs de rendu ou des calculs d'éléments finis, et dans lequel des données d'images sont générées sur la base de ces calculs et sont superposées sur une vue de soudeur d'un joint de soudage au cours de la réalisation de la tâche de production indiquée.

8. Procédé selon l'une quelconque des revendications 1 à 7, **caractérisé en ce que** l'évaluation de la qualité de la réalisation de la tâche de production indiquée par le soudeur est basée sur des performances, et dans lequel l'évaluation basée sur des performances utilise des mesures de performances directes comparées à des limites de commande préréglées pour établir une détermination de qualité le long de la voie d'opération.

9. Procédé selon l'une quelconque des revendications 1 à 8, **caractérisé en ce que** l'évaluation de la qualité de la réalisation de la tâche de production indiquée par le soudeur est basée sur des simulations de qualité numériques, et dans lequel les simulations de qualité numériques utilisent des mesures de manipulation d'outil et de processus pour calculer des probabilités de formation de défaut en fonction d'une position le long de la voie d'opération.

10. Procédé selon l'une quelconque des revendications 1 à 9, **caractérisé en ce que** l'évaluation de la qualité de la réalisation de la tâche de production indiquée par le soudeur est basée sur des mesures de qualité directes, et dans lequel les mesures de qualité directes sont effectuées à partir d'outils de capteurs qui mesurent physiquement la présence de défauts de soudage.

11. Procédé selon l'une quelconque des revendications 1 à 10, **caractérisé en ce que** l'action corrective est une tâche de production disparate ou une demande de réalisation d'une tâche de production indiquée active.

12. Procédé selon l'une quelconque des revendications 1 à 11, **caractérisé en ce que** les variables de pièce incluent en outre un nom ou une identification de pièce, au moins un modèle solide de la pièce, et une liste de tâches à réaliser sur la pièce ; et dans lequel les variables de tâche incluent en outre un nom ou une identification de tâche, une voie d'opération ou des emplacements d'opération, des directions d'opération, et d'autres variables spécifiques à la tâche.

13. Procédé selon l'une quelconque des revendications 1 à 12, **caractérisé en ce que** les variables de forme incluent en outre un type de processus, un type de joint, une position, un matériau, une épaisseur, un type d'électrode, un écart de racine, un palier de racine, et un angle inclus ; et dans lequel les variables d'exécution incluent en outre une polarité, un angle de travail, un angle de déplacement, une longueur d'arc, une vitesse de déplacement, un placement d'outil, une intensité, une tension, une longueur de soudure, et une taille de soudure.

14. Procédé selon l'une quelconque des revendications 1 à 13, **caractérisé en ce qu'**une rétroaction audio automatisée fournit une rétroaction en temps réel au soudeur par l'intermédiaire de diverses commandes vocales automatisées.

15. Procédé selon l'une quelconque des revendications 1 à 14, **caractérisé en ce qu'**un rendu de soudage en réalité augmentée inclut en outre l'utilisation de capteurs qui fournissent des valeurs de position et d'orientation en temps réel à la fois d'un casque de soudage et d'un outil de soudage en plus de données de traitement à un serveur basé sur le cloud, dans lequel le serveur effectue des calculs de rendu ou des calculs d'éléments finis, et dans lequel des données d'images sont générées sur la base de ces calculs et sont superposées sur une vue de soudeur d'un joint de soudage au cours de la réalisation de la tâche de production indiquée.

16. Procédé selon l'une quelconque des revendications 1 à 15, **caractérisé en ce que** l'évaluation basée sur les performances utilise des mesures de performances directes comparées à des limites de commande préréglées pour établir une détermination de qualité le long de la voie d'opération.

17. Procédé selon l'une quelconque des revendications 1 à 16, **caractérisé en ce que** des simulations de qualité numériques utilisent des mesures de manipulation d'outil et de processus pour calculer des probabilités de formation de défaut en fonction d'une position le long de la voie d'opération.

18. Procédé selon l'une quelconque des revendications 1 à 17, **caractérisé en ce que** des mesures de qualité directes sont effectuées à partir d'outils de capteurs qui mesurent physiquement la présence de défauts de soudage.

19. Système (100) de surveillance et de caractérisation de soudage manuel, le système (100) comprenant à la fois des composants matériels et logiciels, dans lequel les composants matériels et logiciels sont opérationnels pour recueillir et traiter des données en temps réel, et dans lequel les données sont dérivées d'un exercice de soudage réel conduit par un soudeur,
dans lequel il est fourni, au système, des informations de pièce, des objectifs de commande de variables de processus et des limites d'acceptabilité (110) ;
dans lequel il est sélectionné une pièce à souder à partir des informations de pièce (120) ;
dans lequel il est indiqué une tâche de production à réaliser sur la pièce sélectionnée (130) ;
dans lequel la tâche de production indiquée est réalisée ;
dans lequel il est évalué la qualité de la réalisation de la tâche de production indiquée par le soudeur sur la base des objectifs de commande de variables de processus et des limites d'acceptabilité (140, 150) ; dans lequel il est mémorisé des données recueillies à partir de l'évaluation de la réalisation de la tâche de production indiquée,
et **caractérisé en ce que** :
le système de soudage inclut en outre : (a) un composant de génération de données, dans lequel le composant de génération de données inclut en outre :
(i) une fixation, dans lequel les caractéristiques géométriques de la fixation sont prédéterminées ;
(ii) une pièce d'ouvrage apte à être montée sur la fixation, dans lequel la pièce d'ouvrage inclut au moins un joint à souder, et dans lequel le vecteur s'étendant le long du joint à souder définit une voie d'opération ; (iii) au moins un dispositif d'étalonnage, dans lequel chaque dispositif d'étalonnage inclut en outre au moins deux marqueurs de point faisant partie intégrante de celui-ci, et dans lequel la relation géométrique entre les marqueurs de point et la voie d'opération est prédéterminée ; et (iv) un outil de soudage, dans lequel l'outil de soudage est opérationnel pour former une soudure au joint à souder, dans lequel l'outil de soudage définit un point d'outil et un vecteur d'outil, et dans lequel l'outil de soudage inclut en outre une cible attachée à l'outil de soudage, dans lequel la cible inclut en outre une pluralité de marqueurs de point montés sur celle-ci dans un motif prédéterminé, et dans lequel le motif prédéterminé des marqueurs de point est opérationnel pour définir un corps rigide ; et (b) un composant d'acquisition de données, dans lequel le composant d'acquisition de données inclut en outre un système d'imagerie (300) pour l'acquisition d'images des marqueurs de point ; et (c) un composant de traitement de données, dans lequel le composant de traitement de données est opérationnel pour recevoir des informations en provenance du composant d'acquisition de données puis pour calculer : (i) la position et l'orientation de la voie d'opération par rapport à l'espace tridimensionnel visible par le système d'imagerie (300) ; (ii) la position du point d'outil et l'orientation du vecteur d'outil par rapport au corps rigide ; et (iii) la position du point d'outil et l'orientation du vecteur d'outil par rapport à la voie d'opération,
dans lequel la tâche de production à réaliser sur la pièce inclut en outre des variables de forme et des variables d'exécution ; dans lequel les variables de forme incluent en outre un type de processus, un type de joint, une position, un matériau, une épaisseur, un type d'électrode, un écart de racine, un palier de racine, et un angle inclus ; et dans lequel les variables d'exécution incluent en outre une polarité, un angle de travail, un angle de déplacement, une longueur d'arc, une vitesse de déplacement, un placement d'outil, une intensité, une tension, une longueur de soudure, et une taille de soudure.

20. Système (100) selon la revendication 19, **caractérisé en ce qu'**il est fourni une rétroaction en temps réel au soudeur réalisant la tâche de production indiquée, et/ou il est exigé une action corrective en ce qui concerne la qualité de la réalisation de la tâche de production indiquée.

21. Système (100) selon la revendication 19 ou 20, **caractérisé en ce que** les informations de pièce incluent en outre des variables de pièces et des variables de tâche ; (c) la sélection d'une pièce à souder à partir des informations de pièce ; (d) l'indication d'une tâche de production à réaliser sur la pièce sélectionnée, dans lequel la tâche de production à réaliser sur la pièce inclut en outre des variables de forme et des variables d'exécution ; (e) la réalisation de la tâche de production indiquée ; (f) la fourniture d'une rétroaction en temps réel au soudeur réalisant la tâche de production indiquée, dans lequel la rétroaction en temps réel inclut en outre une rétroaction audio automatisée ou un rendu de soudage en réalité augmentée ; (g) l'évaluation de la qualité de la réalisation de la tâche de production indiquée par le soudeur sur la base des objectifs de commande de variables de processus et des limites d'acceptabilité, et dans lequel l'évaluation de qualité est en outre basée sur des mesures de performances, des simulations de qualité numériques, des mesures de qualité directes, ou des combinaisons de celles-ci ; (h) l'exigence d'une action corrective en ce qui concerne la qualité de la réalisation de la tâche de production indiquée, dans lequel l'action corrective est soit une tâche de production disparate soit une demande de réalisation d'une tâche de production indiquée active ; et (i) la mémorisation de données recueillies à partir de l'évaluation de la réalisation de la tâche de production indiquée.

22. Système (100) selon l'une quelconque des revendications 19 à 21, **caractérisé en ce que** l'évaluation de la qualité de la réalisation de la tâche de production indiquée par le soudeur est basée sur des performances, et **en ce que** l'évaluation basée sur des performances utilise des mesures de performances directes comparées à des limites de commande préréglées pour établir une détermination de qualité le long de la voie d'opération.

23. Système (100) selon l'une quelconque des revendications 19 à 22, **caractérisé en ce que** l'évaluation de la qualité de la réalisation de la tâche de production indiquée par le soudeur est basée sur des simulations de qualité numériques, et dans lequel les simulations de qualité numériques utilisent des mesures de manipulation d'outil et de processus pour calculer des probabilités de formation de défaut en fonction d'une position le long de la voie d'opération.

24. Système (100) selon l'une quelconque des revendications 19 ou 23, **caractérisé en ce que** l'évaluation de la qualité de la réalisation de la tâche de production indiquée par le soudeur est basée sur des mesures de qualité directes, et **en ce que** les mesures de qualité directes sont effectuées à partir d'outils de capteurs qui mesurent physiquement la présence de défauts de soudage.

25. Système (100) selon l'une quelconque des revendications 19 ou 24, **caractérisé en ce que** l'action corrective est une tâche de production disparate ou une demande de réalisation d'une tâche de production indiquée active.

26. Système (100) selon l'une quelconque des revendications 19 ou 25, **caractérisé en ce que** les variables de pièce incluent en outre un nom ou une identification de pièce, au moins un modèle solide de la pièce, et une liste de tâches à réaliser sur la pièce ; et **en ce que** les variables de tâche incluent en outre un nom ou une identification de tâche, une voie d'opération ou des emplacements d'opération, des directions d'opération, et d'autres variables spécifiques à la tâche.

27. Système (100) selon l'une quelconque des revendications 19 ou 26, **caractérisé en ce qu'**une rétroaction audio automatisée fournit une rétroaction en temps réel au soudeur par l'intermédiaire de diverses commandes vocales automatisées.

28. Système (100) selon l'une quelconque des revendications 19 ou 27, **caractérisé en ce qu'**un rendu de soudage en réalité augmentée inclut en outre l'utilisation de capteurs qui fournissent des valeurs de position et d'orientation en temps réel à la fois d'un casque de soudage et d'un outil de soudage en plus de données de traitement à un serveur basé sur le cloud, dans lequel le serveur effectue des calculs de rendu ou des calculs d'éléments finis, et dans lequel des données d'images sont générées sur la base de ces calculs et sont superposées sur une vue de soudeur d'un joint de soudage au cours de la réalisation de la tâche de production indiquée.

29. Système (100) selon l'une quelconque des revendications 19 ou 28, **caractérisé en ce que** l'évaluation basée sur les performances utilise des mesures de performances directes comparées à des limites de commande préréglées pour établir une détermination de qualité le long de la voie d'opération.

30. Système (100) selon l'une quelconque des revendications 19 ou 29, **caractérisé en ce que** des simulations de qualité numériques sont effectuées à partir d'outils de capteurs qui mesurent physiquement la présence de défauts de soudage.
